# EUROPEAN PATENT SPECIFICATION

(11) **EP 2 580 491 B1**
(45) Date of publication and mention of the grant of the patent: **11.01.2017**
(21) Application number: 10736830.0
(22) Date of filing: 11.06.2010
(51) Int. Cl.: F16H 1/32, F16H 3/72

(54) **KINEMATISM WITH ORBITAL MOVEMENT WITH FIXED ORIENTATION**
KINEMATISMUS MIT ORBITALER BEWEGUNG MIT FIXIERTER ORIENTIERUNG
SYSTÈME CINÉMATIQUE DOTÉ D'UN MOUVEMENT ORBITAL AYANT UNE ORIENTATION FIXE

(43) Date of publication of application: 17.04.2013
(73) Proprietor: Tecnodue S.r.l., I-10100 TORINO (IT)
(72) Inventor: CONTARDO, Livio, 10100 Torino (IT)
(74) Representative: Garavelli, Paolo
(86) International application number: PCT/IT2010/000264
(87) International publication number: WO 2011/154981

(56) References cited:
- WO-A1-2006/090421
- DE-A1- 3 739 238
- DE-U1-202006 010 049
- JP-A- 61 119 850
- US-A- 3 935 750
- US-B2- 6 764 423
- KEDROWSKI D K ET AL: "NUTATING GEAR DRIVETRAIN FOR A CORDLESS SCREWDRIVER", MECHANICAL ENGINEERING, ASME. NEW YORK, US, vol. 116, no. 1, 1 January 1994 (1994-01-01), pages 70-74, XP000439367, ISSN: 0025-6501

## Description

The present invention refers to a kinematism with orbital movement with fixed orientation, that can be used in particular for making a revolution variator, reducer or multiplier in a mechanical transmission.

In the field of transmissions with continuous revolution variation of a mechanical type, the only known systems are based on friction (variable pulleys and trapezoidal belts like the Variomatic gearbox marketed by Company DAF, or the motion transmitting system with continuous revolution variation in Fischer turns, that used alternate current motors, therefore with a constant number of revolutions), with a limitation, for obvious known reasons, on values of transmitted torque.

In the field of torque and revolution variators of the oil-dynamic type, there are gearboxes equipped with torque converter, that however similarly have step-type transmission ratios and absorb a not neglected part of power that is dissipated in internal frictions due to blows-by of viscous liquid in the interface areas of the impellers.

In the field of reducers, the prior art instead provides various solutions, that range from worm screws to the cascade of gears, till bevel torques, always anyway based on gear-type transmissions and consequently always constrained to fixed ratios. It is therefore not possible to change the number of revolutions apart from a change of ratio.

DE-U1-20 2006 010049 discloses a kinematism according to the preamble of Claim 1.

Therefore, object of the present invention is solving the above prior art problems by providing a kinematism with orbital movement with fixed orientation that can be adapted to situations providing in particular for the use of motors with constant number of revolutions or with a reduced variability range.

Another object of the present invention is providing a kinematism with orbital movement with fixed orientation that, differently from known automatic gearboxes, allows keeping constant the number of revolutions of the engine to which it is coupled, that, for this reason, can indifferently be, in addition to an explosion engine as normally known, an endothermic, electric, hydraulic, pneumatic or permanent magnet engine, of the type with constant rotation.

Moreover, an object of the present invention is providing a kinematism with orbital movement with fixed orientation that, differently from known devolution variators, allows transmitting even very high powers.

The above and other objects and advantages of the invention, as will appear from the following description, are obtained with a kinematism with orbital movement with fixed orientation as claimed in claim 1. Preferred embodiments and non-trivial variations of the present invention are the subject matter of the dependent claims.

It will be immediately obvious that numerous variations and modifications (for example related to shape, sizes, arrangements and parts with equivalent functionality) can be made to what is described, without departing from the scope of the invention as appears from the enclosed claims.

The present invention will be better described by some preferred embodiments thereof, provided as a nonlimiting example, with reference to the enclosed drawings in which:
- Figure 1 shows a schematic diagram of a side section of a preferred embodiment of the kinematism according to the present invention;
- Figures 2a, 2b and 2c show side perspective views of the kinematism of Figure 1 in different positions assumed during its operation;
- Figure 3 shows a schematic diagram of a side section of an alternative embodiment of the kinematism according to the present invention;
- Figures 4a, 4b and 4c shows side perspective views of the kinematism of Figure 3 in different positions assumed during its operation;
- Figures 5a and 5b show side perspective views of another preferred embodiment of the kinematism according to the present invention in different positions assumed during its operation; and
- Figure 5c shows a front perspective view of the kinematism of Figures 5a and 5b.

With reference to the Figures, it is possible to note that the kinematism 1 with orbital movement with fixed orientation according to the present invention comprises at least one first and one second motion transmitting means, respectively 2 and 3, preferably and respectively representing a motion entry shaft and a motion output shaft in/from the kinematism 1 with orbital movement, respectively connected to a thrust system 4 and to a driven system 5 that are mutually facing, and described below, and mutually frontally cooperating through respectively first 6 and second 7 mechanically cooperating means, at least such first motion transmitting means 2 being rotating around a main rotation axis R-R. Advantageously, the first mechanically cooperating means 6 are adapted to apply a series of points of force on the second mechanically cooperating means 7 in such a way that the set of positions occupied instant by instant in the space by such singularly considered point of force describe a closed or open curve, having a behaviour that can substantially be assimilated to a Lemniscate curve; moreover, the thrust system 4 and, consequently, the first mechanically cooperating means 6, is slanted with respect to such main rotation axis R-R and is symmetrical and coaxial with a slanted axis R'-R' around which the curves of the points of force are symmetrically distributed.

The point of force is a point arranged on the second mechanically cooperating means 7 in which, instant by instant, the force vector is applied.

Moreover, the kinematism 1 according to the present invention comprises rotation-preventing means 8 adapted to prevent the rotation of the single point of force with respect to the main rotation axis R-R and to compel the above point to move in space along the previously defined curve of the point of force. Such geometry therefore performs a coupling that combines an orbital movement of the support thrust system 4 with respect to the slanted axis R'-R' conferring a movement in space, and a traditional rotary movement around the main rotation axis R-R that confers a movement in a plane; such two above-described movements are then transmitted to the driven system 5, through the second mechanically cooperating means supported by the second transmission shaft (second motion transmitting means) 3 that is rotated around such main rotation axis R-R.

In general, therefore, the operating principle of the kinematism 1 according to the present invention can be described as follows; considering a transfer of forces between the motion entry shaft (first motion transmitting means) 2 and the motion output shaft (second motion transmitting means) 3, it is possible to obtain a reduction or multiplication (with the same verse or a contrary verse) of the entry torque with respect to the output torque, and a related revolution variation, by placing suitable rotation-preventing constraints through the rotation-preventing means 8 to the points of force symmetrically arranged with respect to the slanted axis R'-R' intersecting the main rotation axis R-R. Such points of force will then be compelled to orbit in space keeping a fixed orientation. The curve of the point of force described by such orbiting can be assimilated to a Lemniscate curve with behaviour as a Mobius ring through which the entry torque is transmitted to the driven system 5 by applying the points of force on the second mechanically cooperating means 7 by the first mechanically cooperating means 6 of the thrust system 4.

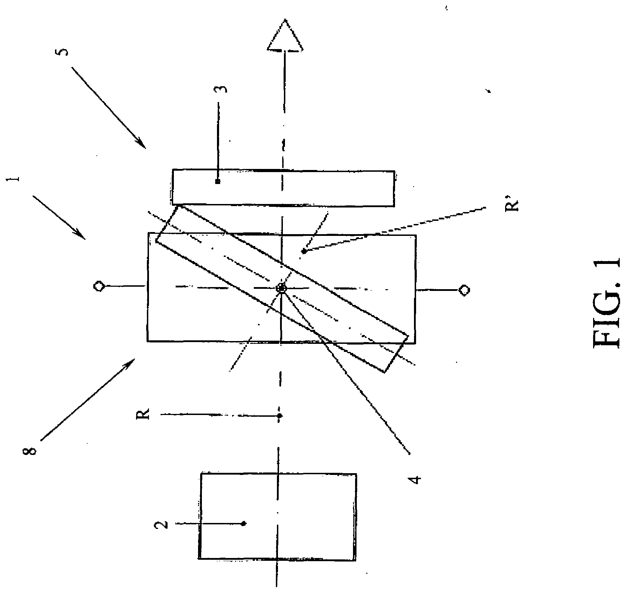

With particular reference to Figures 1 to 2c, it is possible to note a first preferred embodiment of the kinematism 1 according to the present invention functioning as devolution reducer, namely the case in which the following conditions occur:
- output torque > entry torque with respect to the main rotation axis R-R;
- number of revolutions as output from the second transmission shaft (second motion transmitting means) 3 < number of revolutions as entry in the first rotation shaft (first motion transmitting means) 2.

In such preferred embodiment of the kinematism 1 according to the present invention, the thrust system 4 is composed of a pair of disks opposed and coaxial with the slanted axis R'-R', a first one 9 of such disks being equipped with the first mechanically cooperating means 6, preferably made as a first system with undulated teeth, and a second one 10 of such disks being equipped with a second system 11 with undulated teeth: the rotation-preventing means 8 preferably comprise a third fixed system 12 with undulated teeth coaxial with the main rotation axis R-R and cooperating with the second system with undulated teeth 11 of the second disk 10 of the thrust system 4. Obviously, the rotation-preventing means 8 can be made with any other system suitable for such purpose, such as, for example, rings with fixed fulcrums with respect to the main rotation axis R-R, tangential contact points between surfaces, etc., without departing from the scope of the present invention.

The driven system 5 instead is composed of a third disk 13 facing and cooperating with the first disk 9 of the thrust system 4 in which the second mechanically cooperating means 7 comprise a fourth system with undulated teeth integral with the second rotation shaft (second motion transmitting means) 3 and cooperating with the first system with undulated teeth. Obviously, also the mechanically cooperating means can be made through any other force transmitting system deemed suitable for rotating the output shaft (second motion transmitting means) 3, such as, for example, hinges with articulated joint, the use of magnetic fields, etc, without thereby departing from the scope of the present invention.

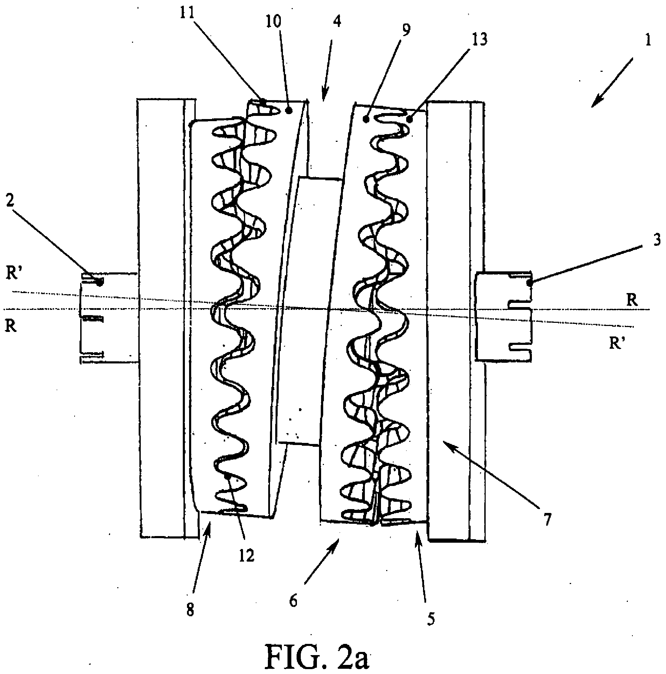

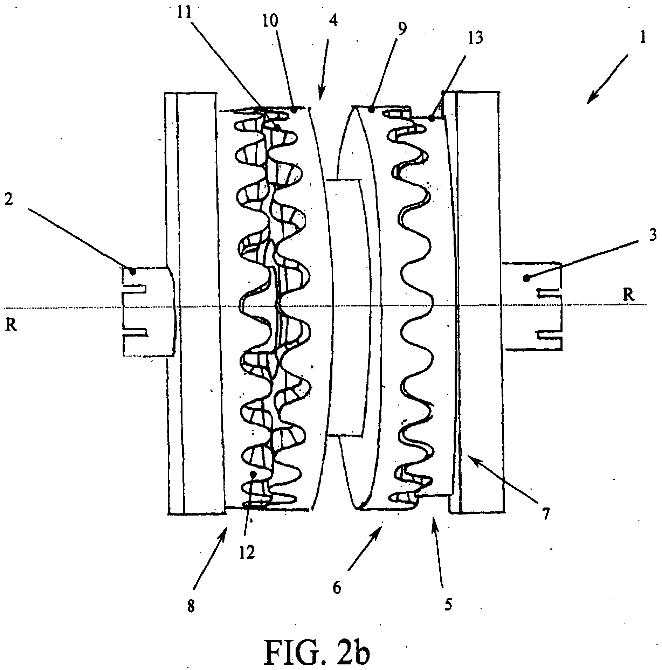

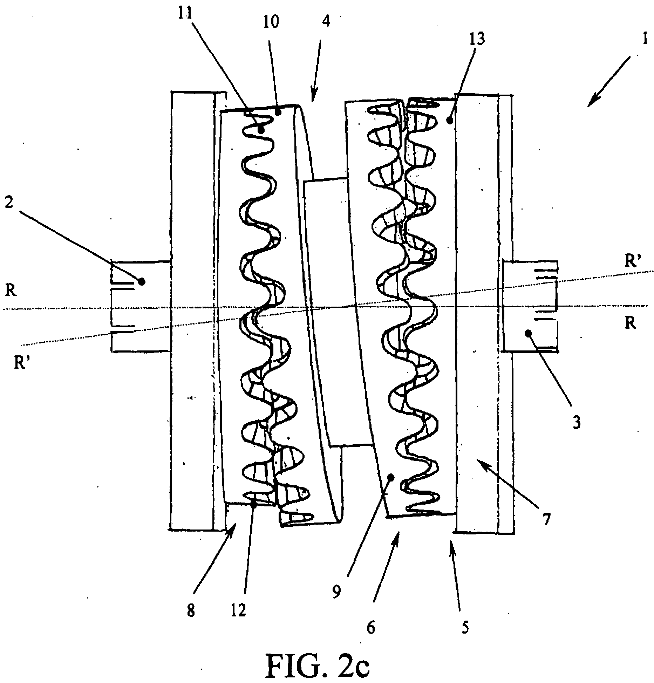

The thrust system 4 can be connected to the first motion transmitting means 2, and in particular to the first rotation shaft 2, by interposing a cylindrical slanted portion of such shaft 2 coaxial with the slanted axis R'-R' or by keying-in a bush with slanted hole coaxial with the slanted axis R'-R', or any other mechanical working system suitable for such purpose. Orthogonally to the slanted axis R'-R', and at a distance defined by the rays of the first and third disks 9, 13, by rotating the first rotation shaft (fist motion transmitting means) 2 around the main rotation axis R-R, the points of force are symmetrically distributed, and can be located as tangential contact points between the first and the fourth system with undulated teeth, or any other force transferring means suitable for such purpose to realise mechanically cooperating means. The points of force are then subjected to rotation-preventing constraints imposed by the rotation-preventing means 8, and in particular by the cooperation between the second 11 and the third system 12 with undulated teeth. Due thereby to the rotation of the first entry rotation shaft (first motion transmitting means) 2, the slanted axis R'-R', since it is integral with and intersecting such first rotation shaft 2, is compelled to rotate: since the points of force are constrained with a fixed orientation with respect to the main rotation axis R-R and, due to the action of the rotation-preventing means, cannot rotate by following the rotation of the slanted axis R'-R', they are compelled to orbit by drawing in the space a Lemniscate curve with behaviour as Mobius ring. By instantaneously taking the force in the above points through the contact between the first and the fourth system with undulated teeth, the second output rotation shaft 3 is rotated and, taking into account that this latter one is coaxial with the main rotation axis R-R, a reduction of revolutions and an increase of torque are obtained. Some example operation positions assumed by the kinematism 1 as described above are shown, in particular, in Figures 2a, 2b and 2c.

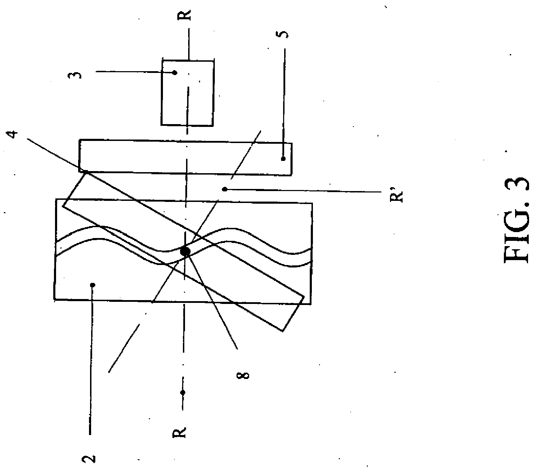

Instead, with particular reference to Figures 3 to 4c, it is possible to note a first preferred embodiment of the kinematism 1 according to the present invention working as speed multiplier, namely the case in which the following conditions occur:
- output torque < entry torque with respect to the main rotation axis R-R;
- number of revolutions as output from the second transmission shaft 3 > number of revolutions as entry in the first motion transmitting means 2.

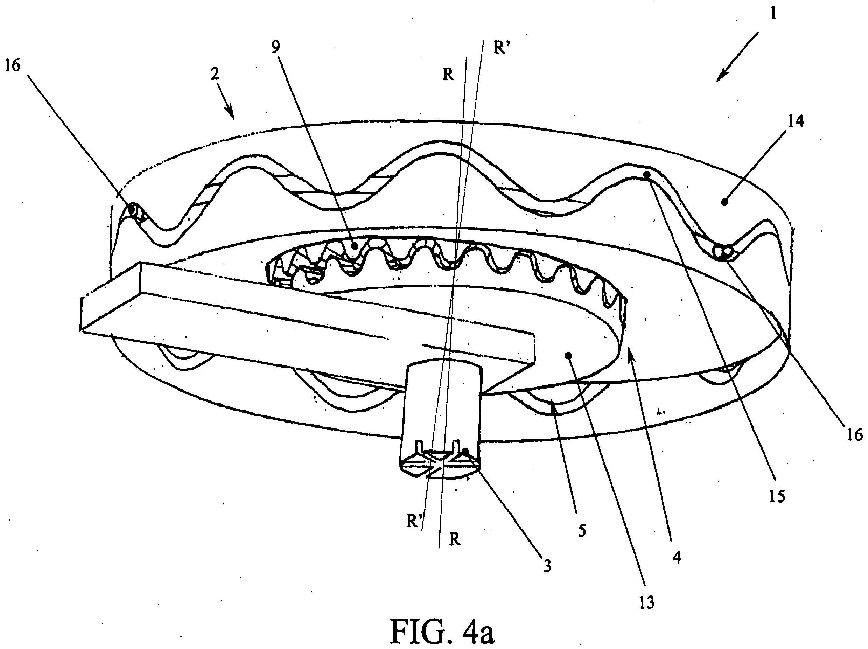

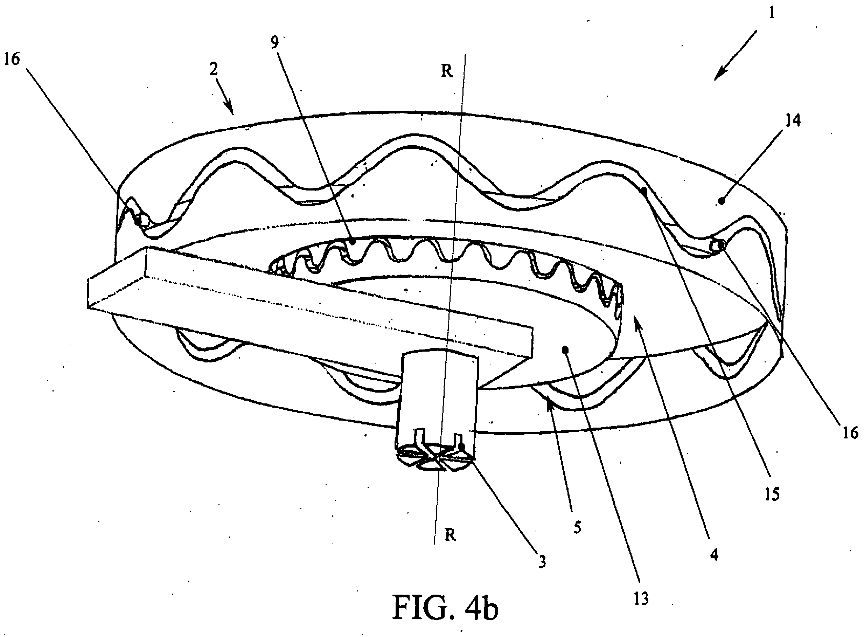

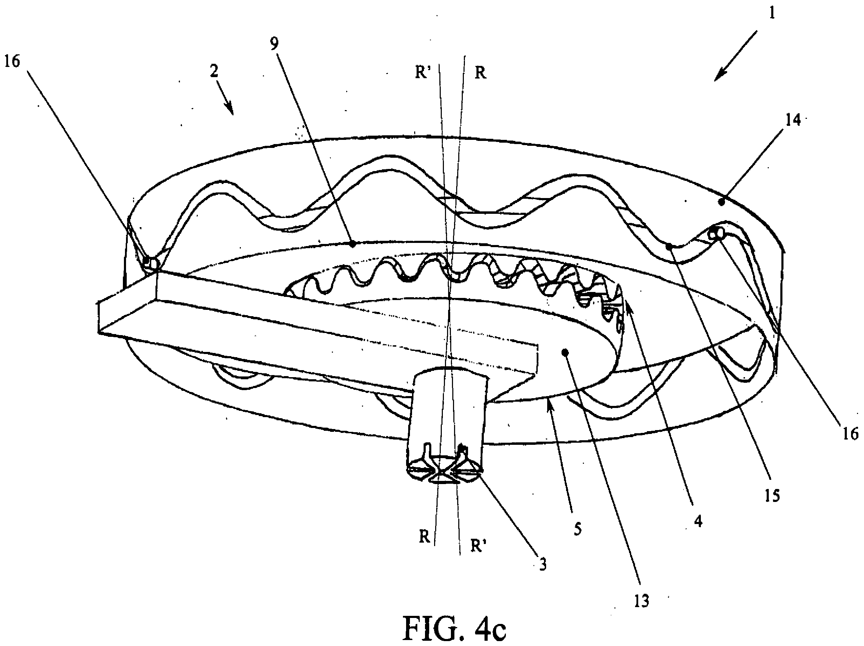

In such preferred embodiment of the kinematism 1 according to the present invention, the first motion transmitting means comprise at least one ring 14 rotating around the main rotation axis R-R equipped on its perimeter with at least one groove 15 shaped as a sinusoid, or any force transmitting means deemed suitable, inside which at least one pin 16 slides, integral on its perimeter with the first disk 9 of the thrust system 4: also in this case, the driven system 5 is composed of the third disk 13 facing and cooperating with the first disk 9 of the thrust system 4 and equipped with the fourth system with undulated teeth integral with the second rotation shaft (second motion transmitting means) 3 and cooperating with the first system with undulated teeth of the thrust system 4: also in this case, by applying a torque through the ring 14 in points subjected to rotation-preventing constraints, the points located by the applied forces are distributed on a line of the points of force in the space according to a Lemniscate curve with behaviour as Mobius ring. Such orbiting with fixed orientation of the points of force generates a pair of forces orthogonal to the main rotation axis R-R that will rotate the output transmission shaft (second motion transmitting means) 3 with a number of revolutions greater than the number of revolutions as entry and a reduced torque. Some example operating positions assumed by the kinematism 1 as described above are shown, in particular, in Figures 4a, 4b and 4c.

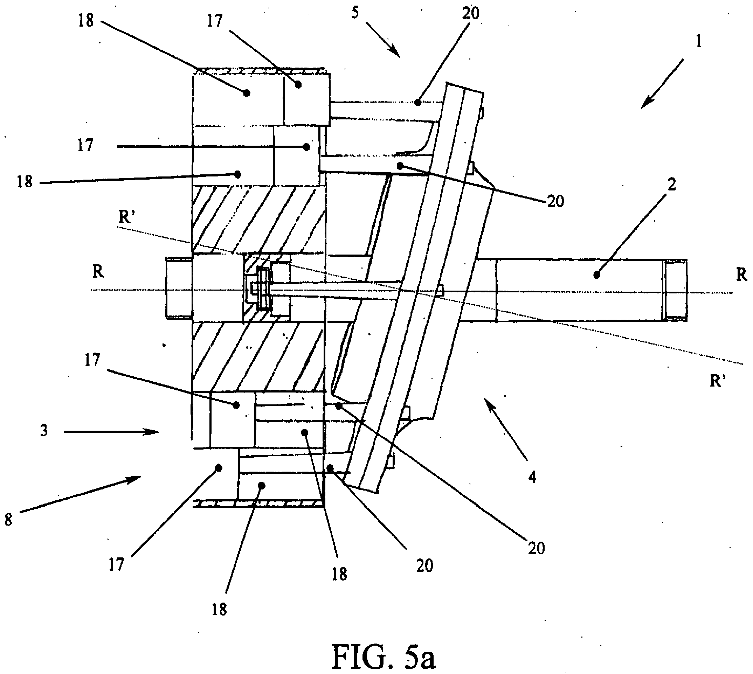

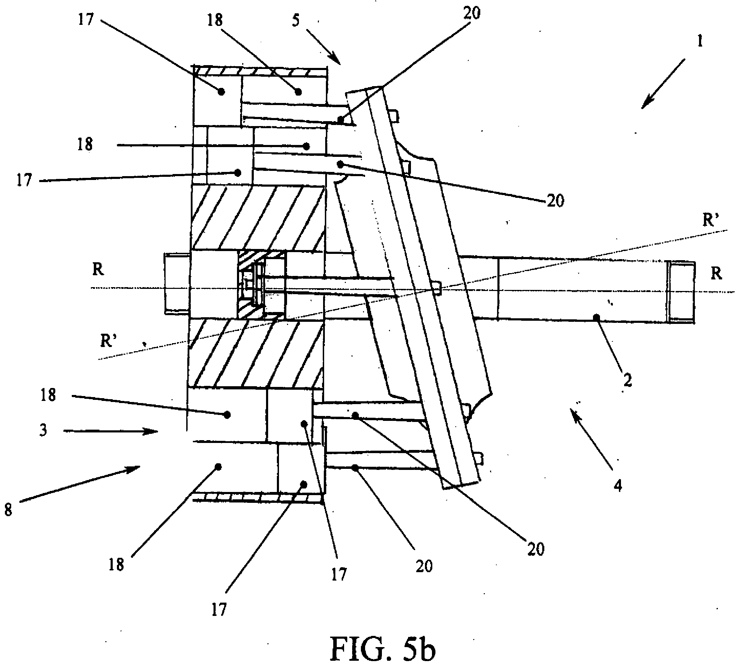

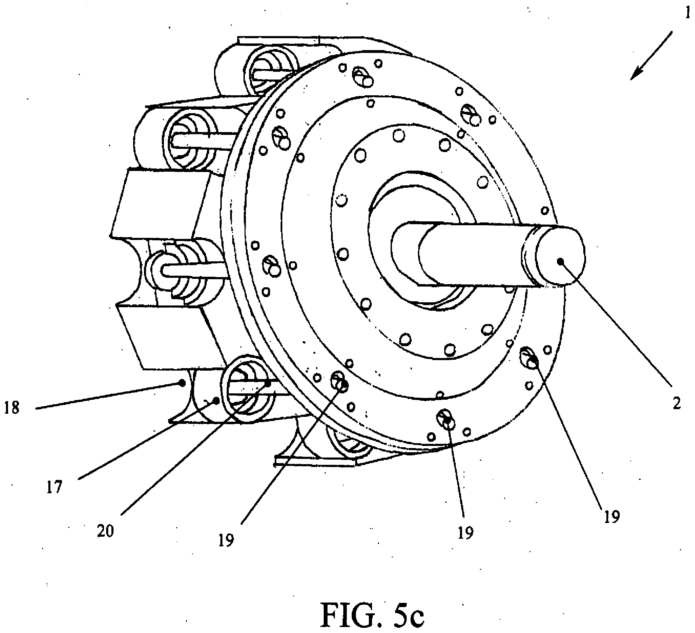

Obviously, the continuous type of the kinematism 1 can be subjected to further modifications or variations as well as further applications not explicitly described, wholly within the grasp of an average technician in the field, though remaining within the same inventive principle: for example, the combination of a reducer type of the kinematism 1 with a multiplier type of the kinematism 1, as previously described, allows making a complex kinematism 1 operating as variator. Or, as can be noted in Figures 5a, 5b and 5c, if the orbital type of the kinematism 1 with fixed orientation according to the present invention is exploited to perform a work instead of increasing a torque, it can for example be used for generating a compressed fluid: in such case, it can be noted that the rotation-preventing means 8 are made of the same interference existing between a plurality of radially arranged pistons 17, that make the second motion transmitting means and the respective cylinders 18, and the mechanically cooperating means are represented by the articulated joints 19 connecting the connecting rods 20 of such pistons to the thrust system 4, through which the points of force are transmitted.

## Claims

1. Kinematism (1) with orbital movement with fixed orientation comprising at least one first (2) and one second (3) motion transmitting means, respectively connected to a thrust system (4) and to a driven system (5), mutually facing and mutually frontally cooperating through respective first (6) and second (7) mechanically cooperating means, at least said first motion transmitting means (2) being rotating around a main rotation axis (R-R), said first mechanically cooperating means (6) being adapted to apply a series of points of force to said second mechanically cooperating means (7) in such a way that a set of positions, instant by instant occupied in the space by each one of said points of force, individually considered, substantially describes a Lemniscate curve as Mobius ring, said thrust system (4) being slanted with respect to said main rotation axis (R-R) and symmetrical with and coaxial to a slanted axis (R'-R') around which said curve of said points of force are symmetrically distributed, the kinematism (1) further comprising rotation-preventing means (8) adapted to prevent a rotation of each one of said points of force with respect to said main rotation axis (R-R), **characterised in that** said first motion transmitting means comprise at least one ring (14) rotating around said main rotation axis (R-R) equipped on its perimeter with at least one groove (15) shaped as a sinusoid inside which at least one pin (16) slides, integral on its perimeter with the disk (9) of the thrust system (4).

2. Kinematism (1) with orbital movement according to claim 1, **characterised in that** said first (2) and said second (3) motion transmitting means are respectively a motion entry shaft and a motion output shaft in/from said kinematism (1) with orbital movement.

3. Kinematism (1) with orbital movement according to claim 1, **characterised in that** said thrust system (4) is composed of a pair of disks opposed to and coaxial with said slanted axis (R'-R'), a first one (9) of said disks being equipped with said first mechanically cooperating means (6).

4. Kinematism (1) with orbital movement according to claim 1, **characterised in that** said thrust system (4) is composed of a disk (9) equipped with said first mechanically cooperating means (6).

5. Kinematism (1) with orbital movement according to claim 3 or 4, **characterised in that** said first mechanically cooperating means (6) comprise a first system with undulated teeth.

6. Kinematism (1) with orbital movement according to claim 3, **characterised in that** a second one (10) of said disks is equipped with a second system with undulated teeth (11), and said rotation-preventing means (8) comprise a third fixed system with undulated teeth (12) coaxial with said main rotation axis (R-R) and cooperating with said second system with undulated teeth (11) of said second disk (10) of said thrust system (4).

7. Kinematism (1) with orbital movement according to claim 3 or 4, **characterised in that** said driven system (5) is composed of a third disk (13) facing and cooperating with said disk (9) of said thrust system (4), said second mechanically cooperating means (7) comprising a fourth system with undulated teeth cooperating with said first system with undulated teeth.

8. Kinematism (1) with orbital movement according to claim 1, **characterised in that** said rotation-preventing means (8) comprise a plurality of pistons (17) and respective cylinders (18) and said mechanically cooperating means comprise articulated joints (19) for connecting the connecting rods (20) of said pistons (19) to said thrust system (4).

## Patentansprüche

1. Getriebe mit Orbitalbewegung (1) mit fester Orientierung, das mindestens eine erste (2) und eine zweite (3) Vorrichtung zur Kraftübertragung einschließt, die jeweils mit einem Schubsystem (4) und einem geführten System (5) verbunden sind, die sich gegenüber liegen und frontal durch jeweils erste (6) und zweite (7) Vorrichtungen für die mechanische Zusammenarbeit zusammenarbeiten, mindestens die erste Vorrichtung zur Kraftübertragung (2) dreht sich um eine Hauptdrehachse (R-R), die genannten ersten Vorrichtungen für die mechanische Zusammenarbeit (6) dienen dazu, mehrere Kraftpunkte auf die genannten zweiten Vorrichtungen für die mechanische Zusammenarbeit (7) anzuwenden, sodass eine Gruppe von Positionen, die schrittweise von jedem der genannten Kraftpunkte im Raum besetzt werden, einzeln betrachtet, grundlegend eine Lemniskate Kurve bzw. Möbiusband umschreiben, das genannte Schubsystem (4) ist gegenüber der genannten Hauptdrehachse (R-R) geneigt und symmetrisch und koaxial zu einer geneigten Achse (R'-R'), um die sich symmetrisch die genannten Kurven der genannten Kraftpunkte verteilen, das Getriebe (1) enthält außerdem Verdrehschütze (8), die dazu dienen, eine Drehung jedes der genannten Kraftpunkte gegenüber der genannten Hauptdrehachse (R-R) zu verhindern, und ist **dadurch gekennzeichnet, dass** die genannte erste Vorrichtung zur Kraftübertragung mindestens einen Ring (14) enthält, der sich um die genannte Hauptdrehachse (R-R) dreht, der am Umfang mit mindestens einer Rille (15) mit Sinusverlauf ausgestattet ist, in der mindestens ein Bolzen (16) gleitet, der am Umfang der Scheibe (9) des Schubsystems (4) befestigt ist.

2. Getriebe mit Orbitalbewegung (1) gemäß Patentanspruch 1, das **dadurch gekennzeichnet ist, dass** die genannte erste (2) und die genannte zweite (3) Vorrichtung zur Kraftübertragung jeweils eine Eingangswelle der Bewegung und eine Ausgangswelle der Bewegung in Richtung/vom genannten Getriebe mit Orbitalbewegung (1) sind.

3. Getriebe mit Orbitalbewegung (1) gemäß Patentanspruch 1, das **dadurch gekennzeichnet ist, dass** das genannte Schubsystem (4) aus einem Paar von Scheiben besteht, die gegenüber und koaxial zur genannten geneigten Achse (R'-R') liegen, eine erste (9) der genannten Scheiben ist mit den genannten ersten Vorrichtungen für die mechanische Zusammenarbeit (6) ausgestattet.

4. Getriebe mit Orbitalbewegung (1) gemäß Patentanspruch 1, das **dadurch gekennzeichnet ist, dass** das genannte Schubsystem (4) aus einer Scheibe besteht, die mit den genannten ersten Vorrichtungen für die mechanische Zusammenarbeit (6) ausgestattet ist.

5. Getriebe mit Orbitalbewegung (1) gemäß Patentanspruch 3 oder 4, das **dadurch gekennzeichnet ist, dass** die genannten ersten Vorrichtungen für die mechanische Zusammenarbeit (6) ein erstes System mit gewellten Zähnen enthalten.

6. Getriebe mit Orbitalbewegung (1) gemäß Patentanspruch 3, das **dadurch gekennzeichnet ist, dass** eine zweite (10) der genannten Scheiben mit einem zweiten System mit gewellten Zähnen (11) ausgestattet ist, und dass die genannten Verdrehschütze (8) ein drittes festes System mit gewellten Zähnen (12) enthalten, das koaxial zur genannten Hauptdrehachse (R-R) liegt und mit dem genannten zweiten System mit gewellten Zähnen (11) der genannten zweiten Scheibe (10) des genannten Schubsystems (4) zusammenarbeitet.

7. Getriebe mit Orbitalbewegung (1) gemäß Patentanspruch 3 oder 4, das **dadurch gekennzeichnet ist, dass** das genannte geführte System (5) aus einer dritten Scheibe (13) besteht, die auf gleicher Höhe liegt und mit der genannten Scheibe (9) des genannten Schubsystems (4) zusammenarbeitet, die genannten zweiten Vorrichtungen für die mechanische Zusammenarbeit (7) schließen ein viertes System mit gewellten Zähnen ein, das mit dem genannten ersten System mit gewellten Zähnen zusammenarbeitet.

8. Getriebe mit Orbitalbewegung (1) gemäß Patentanspruch 1, das **dadurch gekennzeichnet ist, dass** die genannten Verdrehschütze (8) mehrere Kolben (17) und entsprechende Zylinder (18) einschließen und dass die genannten Vorrichtungen für die mechanische Zusammenarbeit Gelenkkupplungen (19) für die Verbindung der Pleuelstangen (20) der genannten Kolben (19) am genannten Schubsystem (4) enthalten.

## Revendications

1. Cinématisme à mouvement orbital (1) à orientation fixe comprenant au moins un premier (2) et un second (3) moyen de transmission du mouvement, reliés respectivement à un système de poussée (4) et à un système conduit (5), positionnés face à face et coopérant frontalement à travers respectivement des premiers (6) et seconds (7) moyens de coopération mécanique ; au moins le premier moyen de transmission du mouvement (2) tourne autour d'un axe principal de rotation (R-R), les premiers moyens de coopération mécanique (6) permettent d'appliquer une série de points de force sur les seconds moyens de coopération mécanique (7) de sorte qu'un ensemble de positions occupées, instant par instant, dans l'espace de chaque point de force, considéré individuellement, forme substantiellement une courbe Lemniscate en ruban de Mobius ; le système de poussée (4) est incliné par rapport à l'axe de rotation principal (R-R), il est symétrique et coaxial à un axe incliné (R'-R') autour duquel se distribuent de manière symétrique les courbes des points de force ; le cinématisme (1) comprend par ailleurs des moyens anti-rotation (8) empêchant la rotation de chaque point de force par rapport à l'axe principal de rotation (R-R), **caractérisé en ce que** le premier moyen de transmission du mouvement comprend au moins un anneau (14) qui tourne autour de l'axe principal de rotation (R-R) doté le long du périmètre au moins d'une rainure (15) de forme sinusoïdale à l'intérieur de laquelle glisse au moins un pivot (16), solidaire le long du périmètre au disque (9) du système de poussée (4).

2. Cinématisme à mouvement orbital (1), selon la revendication 1, **caractérisé en ce que** le premier (2) et le second (3) moyen de transmission du mouvement sont respectivement un arbre d'entrée du mouvement et un arbre de sortie du mouvement dans/depuis le cinématisme à mouvement orbital (1).

3. Cinématisme à mouvement orbital (1), selon la revendication 1, **caractérisé en ce que** le système de poussée (4) est composé d'un couple de disques opposés et coaxiaux à l'axe incliné (R'-R'), le premier (9) de ces disques est doté de premiers moyens de coopération mécanique (6).

4. Cinématisme à mouvement orbital (1), selon la revendication 1, **caractérisé en ce que** le système de poussée (4) est composé d'un disque (9) doté de premiers moyens de coopération mécanique (6).

5. Cinématisme à mouvement orbital (1), selon la revendication 3 ou 4, **caractérisé en ce que** les premiers moyens de coopération mécanique (6) comprennent un premier système à dents ondulées.

6. Cinématisme à mouvement orbital (1), selon la revendication 3, **caractérisé en ce que** le second (10) disque est doté d'un second système à dents ondulées (11), et les premiers moyens anti-rotation (8) comprennent un troisième système fixe à dents ondulées (12) coaxial à l'axe de rotation principal (R-R) et qui coopère avec le second système à dents ondulées (11) du second disque (10) appartenant au système de poussée (4).

7. Cinématisme à mouvement orbital (1), selon la revendication 3 ou 4, **caractérisé en ce que** le système conduit (5) est composé d'un troisième disque (13) positionné en face du disque (9) du système de poussée (4) et coopérant avec ce disque ; les seconds moyens de coopération mécanique (7) comprennent un quatrième système à dents ondulées qui coopère avec le premier système à dents ondulées.

8. Cinématisme à mouvement orbital (1), selon la revendication 1, **caractérisé en ce que** les moyens anti-rotation (8) comprennent une pluralité de pistons (17) et cylindres respectifs (18) et que les moyens de coopération sont dotés de joints à rotule (19) qui relient les bielles (20) des pistons (19) au système de poussée (4).
